Europäisches Patentamt

European Patent Office

Office européen des brevets

(11) Veröffentlichungsnummer: **0 232 874 B1**

(12) **EUROPÄISCHE PATENTSCHRIFT**

(45) Veröffentlichungstag der Patentschrift: **29.07.92**

(21) Anmeldenummer: **87101701.8**

(22) Anmeldetag: **07.02.87**

Die Akte enthält technische Angaben, die nach dem Eingang der Anmeldung eingereicht wurden und die nicht in dieser Patentschrift enthalten sind.

(51) Int. Cl.⁵: **G01J 3/52**, G09B 19/00, G09B 23/22

(54) **Farbnormanordnung.**

(30) Priorität: **10.02.86 CH 1017/86**

(43) Veröffentlichungstag der Anmeldung:
**19.08.87 Patentblatt 87/34**

(45) Bekanntmachung des Hinweises auf die Patenterteilung:
**29.07.92 Patentblatt 92/31**

(84) Benannte Vertragsstaaten:
**AT BE CH DE ES FR GB GR IT LI LU NL SE**

(56) Entgegenhaltungen:
**DE-A- 2 423 770**
**US-A- 3 474 546**

**JOURNAL OF THE OPTICAL SOCIETY OF AMERICA, Band 65, Nr. 4, April 1975, Seiten 456-460, New York, NY, US; G. WYSZECKI: "Uniform color scales: CIE 1964 U*V*W* conversion of OSA Committee selection"**

**"Principles of Color Technology", Billmeyer, Saltzman, S. 62-64**

(73) Patentinhaber: **Hellwig, Gerriet**
**Teufenerstrasse 13**
**CH-9001 St. Gallen(CH)**

(72) Erfinder: **Hellwig, Gerriet**
**Teufenerstrasse 13**
**CH-9001 St. Gallen(CH)**

(74) Vertreter: **Blum, Rudolf Emil Ernst**
**c/o E. Blum & Co Patentanwälte Vorderberg 11**
**CH-8044 Zürich(CH)**

**Beschreibung**

Die Erfindung betrifft eine Farbnormanordnung nach dem Oberbegriff des Patentanspruches 1.

Farbe kann als aus den drei Grundfarben gelb, blau, rot entstehend angesehen werden. Eine bekannte Farbordnung ist wie folgt aufgebaut. Man ordnet die Grundfarben im Dreieck. Vermischt man jeweils zwei Grundfarben und ordnet das Ergebnis zwischen ihnen an, so erhält man die Komplementärfarben zur jeweils gegenüberliegenden Farbe, also z.B. grün als Mischung von blau und gelb und als Komplementärfarbe zu rot. So ergibt sich ein sechsteiliger Farbkreis in der Reihenfolge gelb, orange, rot, violett, blau, grün, der den nominellen Farben des Regenbogens entspricht. Mischt man drei der Grundfarben, so erhält man trübe Farben wie braun und grau. Diese ordnet man im Inneren des Farbkreises an, dessen Zentrum grau bildet. Da die Farben auch heller oder dunkler sein können, erweitert man diesen Farbkreis zum Globus, wobei am Äquator die intensivsten bzw. gesättigsten Farben angeordnet sind, von denen aus sich die helleren nach oben, die dunkleren nach unten entwickeln. Am Nordpol steht dann weiß, am Südpol schwarz, und die Pole sind durch eine Grauachse verbunden.

Diese bekannte und an sich logisch entwickelte Farbordnung genügt den Anforderungen nicht, welche insbesondere die technische Farbverarbeitung und Farbanwendung stellt. Es geht dabei darum, eine quantifizierbare Ordnung von Farben zu schaffen, welche es erlaubt, eine eindeutige Farbcodierung, d.h. Zuordnung der visuell unterscheidbaren Farben zu jeweils einem Codewert anzugeben. Damit eine solche quantifizierbare Ordnung für technische Anwendungen sinnvoll wird, muß sie Farbtoleranzen bemessen können. Jeweils visuell als gleich empfundene Farbabweichungen sollen gleichen Toleranzmaßzahlen entsprechen und dies über die gesamte Farbordnung. Dies gelingt mit der eingangs erwähnten Ordnung nicht.

Ein Grundproblem bei der Schaffung solcher Farbtafeln oder Farbkörper besteht darin, daß bei bunten Farben, also zum Beispiel Farben aus dem Regenbogen, das menschliche Auge nur begrenzt in der Lage ist, feine Farbtonabstufungen wahrzunehmen. Bei Farben aus dem grau-braun-Bereich jedoch können auch sehr kleine Abstufungen in den Farbtönen ohne Mühe sicher erkannt werden. Umso weniger gesättigt sie sind, umso schwieriger ist die Unterscheidung.

Bei dem bekannten Farbglobus, bei welchem die bunten Farben auf der Oberfläche und die dunklen bis grau reichenden Farben im Innern angeordnet sind, ist deshalb für das menschliche Auge die Farbtonabstufung verzerrt: Je weiter man in das Innere des Globus fortschreitet, desto gedrängter folgen sich die Farbtöne; an der Außenfläche bzw. der großen Ausdehnung der Farbfelder können nur wenige Farbtöne unterschieden werden.

Farbkörper-System sind z.B. unter den Begriffen CIELAB (CIE 1978) und CIELUV (CIE 1976) bekannt. Auch hier sind die gesättigsten Farben, nämlich Grundfarben, Komplementärfarben und ggf. weitere Farben, im Außenbereich der Struktur vorgesehen, während Farben mit abnehmender Sättigung zum Zentrum hin verteilt sind. Dadurch ergeben sich auch hier die genannten Nachteile.

Es ist deshalb eine Aufgabe der Erfindung, eine Normanordnung von Farben zu schaffen, bei welcher für den durchschnittlichen Beobachter gegeneinander farblich in gleichem Maß abgestufte Farbtöne in gleicher räumlicher Distanz zueinander liegen, was insbesondere eine für den ganzen Farbraum gleichermaßen zutreffende numerische Erfassung von Farbtoleranzen gestatten soll.

Diese Aufgabe wird durch die Merkmale des Patentanspruches 1 gelöst.

Mit Hilfe solch einer Normanordnung ist es ohne weiteres möglich, den farblichen Abstand einer Probefarbe durch visuellen Vergleich mit einer darin bestimmten Ausgangsfarbe in Bezug auf den farblichen Abstand zu dieser Ausgangsfarbe zu klassifizieren. Die entsprechende Raumform kann eine im wesentlichen torusförmige Ringstruktur sein, wobei im Bereich der zentralen Öffnung die gesättigsten Farben und im Bereich größerer Radien Farben mit abnehmender Sättigung angeordnet sind.

Eine weitere Aufgabe besteht darin, mit Hilfe der Farbnormanordnung ein Verfahren zur eindeutigen numerischen Bestimmung von Farbtönen und Farbtonabweichungen zu schaffen. Dieses Verfahren ist in den Ansprüchen 10 und 11 gekennzeichnet. Es kann zum Beispiel dazu verwendet werden, um bei gefärbten Gegenständen zu entscheiden, ob deren Farbtöne noch innerhalb einer numerisch festgelegten Toleranz von Farbtonabweichungen liegen. Ausgehend von der geforderten Ausgangsfarbe läßt sich nach dem erfidungsgemäßen Verfahren eine Auflistung von Farbtonstufen erstellen, welche z.B. den zulässigen Toleranzbereich umfaßt. Durch optischen Vergleich der Auflistung mit den zu testenden Färbungen ist es dann leicht zu entscheiden, ob die Färbung im Toleranzbereich liegt.

Das Verfahren erlaubt insbesondere die Kodierung von Farben durch Zahlen, welche zur Farb-Datenverarbeitung verwendbar sind. Dazu wird die Normanordnung von Farben nach dem der zu kodierenden Farbe entsprechenden Farbton abgesucht. Ist der entsprechende Farbton in der Normanordnung durch optischen Vergleich mit der zu verschlüsselnden Farbe gefunden, werden die Koordinaten des Farbtons in der Normanordnung bestimmt. Diese Koordinaten kennzeichnen die zu verschlüsselnde Farbe eindeutig. Entsprechend kann aus numerischen Werten, welche Koordinaten in der Normanordnung darstellen, eindeutig eine Farbe wiederum gefunden werden.

Schließlich besteht eine weitere Aufgabe der Erfindung darin, die Grundlage für die Erzeugung gleichabständiger Farbtonreihen zu schaffen.

Wird z.B. das für das menschliche Auge sichtbare Farbspektrum in 2500 Farbtöne unterteilt, besteht eine erhebliche Schwierigkeit darin, z.B. diejenigen 20 Farbtöne zu bestimmen, welche hinsichtlich ihrer farblichen Abstufung gleichförmig verteilt in diesen 2500 Farbtönen liegen. Solche gleichförmig in einem breiten Farbtonbereich verteilte Farben müssen dann bestimmt werden, wenn z.B. Malkasten zusammengestellt oder Farbbereiche groß abgegrenzt werden sollen. Die Aufgabe, gleichabständige Farbreihen zu schaffen, wird durch die in Anspruch 12 angeführten Merkmale gelöst.

Nachfolgend wird die Erfindung anhand der Figuren näher erläutert. Es zeigen:

Fig. 1 einen Axialschnitt durch die Raumform in vereinfachter Darstellung,

Fig. 2 einen Schnitt durch die horizontale Mittelebene der Raumform,

Fig. 3 eine schematische Darstellung der Farbentwicklung in der Raumform und

Fig. 4 eine perspektivische Ansicht der Raumform in detaillierterer Darstellung.

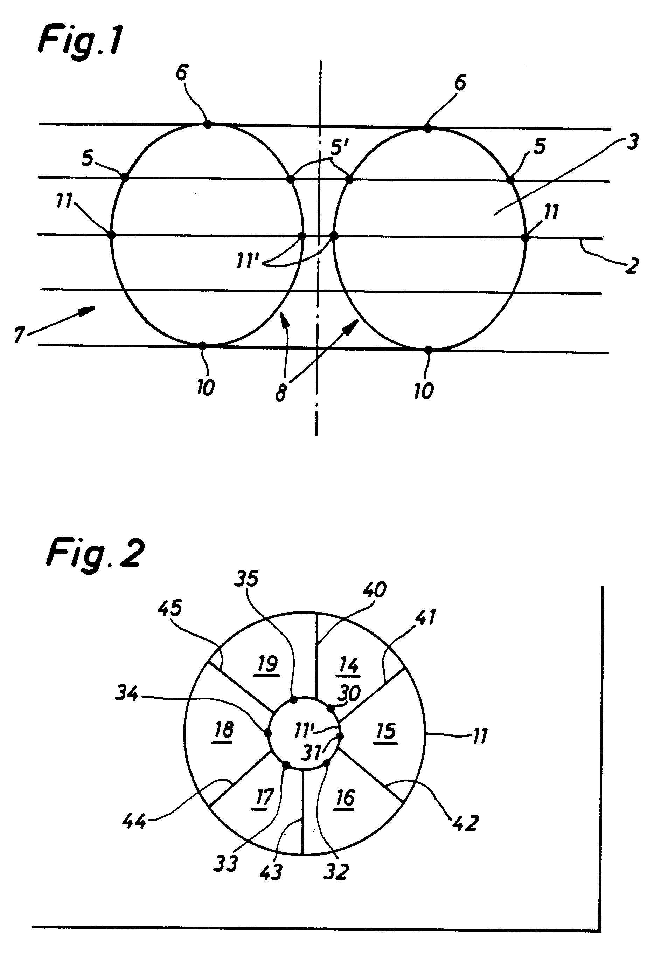

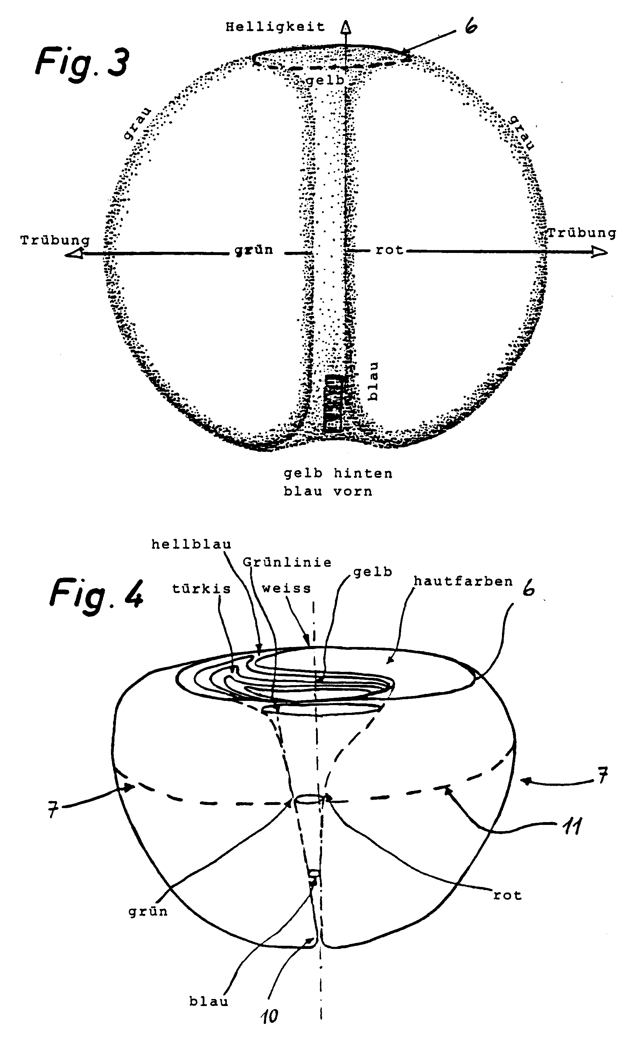

Die vereinfachte Schnittdarstellung von Fig. 1 bzw. Fig. 3 soll zunächst dazu dienen, die grundlegende Struktur der Farbnormanordnung verständlich zu machen.

In Fig. 1 ist eine torusartige Ringstruktur im Axialschnitt gezeigt. Diese regelmäßige Struktur stellt eine Vereinfachung der Verhältnisse dar, von welcher zur besseren Verständlichkeit zuerst ausgegangen werden soll.

Eine obere Kreislinie stellt als Scheitel 6 die höchstliegende Mantellinie parallel zur Mittelebene 2 dar. Die Kreislinien 5, 5' entstehen durch den Schnitt von einer weiteren, zur Mittelebene parallelen Schnittebene mit der Ringstruktur.

Die Kreislinien 11, 11' sind die Schnittlinien der Mittelebene mit der Ringstruktur, wobei die Linie 11 den Schnitt mit dem äußeren Mantelbereich bzw. der Außenhülle 7 und die Linie 11' den Schnitt mit dem inneren Mantelbereich bzw. der inneren Hüllfläche 8 darstellt.

In Fig. 2 ist nun die Farbverteilung in der horizontalen Mittelebene 2 gezeigt. Die sechs gezeigten Sektoren 14 bis 19 bilden den sechsteiligen Farbkreis mit den Farben orange, rot, violett, blau, grün und gelb mit gleicher Helligkeit. Radial innen, bei den Punkten bzw. Orten 30 bis 35 sind die gesättigsten Farben als Farben reinster Ausprägung, während sie nach außen gegen die Mantellinie 11 hin bis zu grau in der Sättigung abnehmen bzw. trüber werden. Am Mantelbereich der zentralen Öffnung 8 erscheinen generell die gesättigsten Farben, während am äußeren Mantelbereich 7 die am wenigsten gesättigten Grautöne lokalisiert sind (vgl. Fig. 3). Bei der tiefsten Mantellinie 10 ist die Farbe schwarz angeordnet, welche sich auf dem Außenmantel über alle Grautonstufen sukzessive zu weiß bei dem Scheitel 6 aufhellt. An der Innenbegrenzung des Sektors stehen also die gesättigsten Farben, die auch aus zwei Grundfarben ermischt sein können, während sich weiter außen weniger gesättigte bzw. unbunte Farben, das heißt die aus drei Grundfarben bestehenden, verteilen. Der so entstehende Farbkreis hat keinen sichtbaren Mittelpunkt. Innerhalb des Kreises 11' der gesättigsten Farben gibt es keine Farbe mehr. Zur Mitte hin haben weniger Farbabstufungen auf einem Radius Platz, was dem menschlichen Sehvermögen entspricht, indem dieses die gesättigten Farben weniger unterscheidet als die geringer gesättigten.

Die Farbverteilung in axialer Richtung ist so getroffen, daß jeweils jede Parallelebene zur Mittelebene 2 jeweils Farben gleicher Helligkeit trägt, wobei nach oben, gegen die Weißlinie 6 hin die Helligkeit zu, nach unten, gegen die Schwarzlinie hin abnimmt (Fig. 3). Da Gelb heller ist als Blau gleicher Sättigung, liegt das gesättigste Gelb in einer höheren Ebene als das gesättigste Blau (Fig. 3).

Diese Farbnormanordnung ist im Sinne von DIN 6164 gleichabständig, d.h. in gleichen Abständen treten gleiche visuell wahrnehmbare Farbabstufungen auf. Zu ihrer Herstellung kann ausgehend von der Mittelebene z.B. wie folgt vorgegangen werden:

Zuerst werden die auf der Kreislinie 11' liegenden Farbtöne wie folgt bestimmt: von einem beliebigen Punkt dieser Kreislinie aus werden die Distanzen zu den nächstliegenden beiden Punkten von gesättigsten Farben gesucht.

Der Farbton in diesem beliebigen Punkt ist eine Mischung aus den Farben der erwähnten, nächstliegenden Punkte, und zwar wird das Mischungsverhältnis nach dem umgekehrt proportionalen Verhältnis der Distanzen zu diesen nächstliegenden Punkten bestimmt. Die Distanzen bemessen sich nach der Länge des Bogenstücks auf der Kreislinie zwischen den entsprechenden Punkten.

Ist die gesamte Kreislinie mit Farbtönen besetzt, werden weitere Punkte in den Sektoren 14 bis 19 gewählt.

Der Beginn erfolgt z.B. im Sektor 15, dem Rosektor, mit Punkten, welche radial außerhalb des Ortes 31 des gesättigsten Rot liegen.

Deren Farbmischung wird bestimmt durch das Rot des Ortes 31 und das Grau auf der Kreislinie 11. Wiederum erfolgt die Zusammensetzung der Farbmischung entsprechend der umgekehrt proportionalen Distanzen auf dem Radius im Ort 31.

Danach werden weitere Radien durch die Orte 30 und 32 bis 35 gezogen und deren Farbton wird analog zum Vorgehen im Rotsektor bestimmt.

Damit ist die Farbzusammenstellung auf der Kreislinie 11' sowie auf den durch die Orte 30 - 35 hindurchgehenden Radien bestimmt.

Als nächster Schritt erfolgt die Farbbestimmung für Orte auf den gemeinsamen Grenzen 40 - 45 der Farbbereiche.

Zur Herstellung der entsprechenden Farbtöne werden nun nicht nur die Farben auf der Kreislinie 11' und das Grau auf der Kreislinie 11 verwendet.

Durch den in seinem Farbton zu bestimmenden Ort wird ein zu den Kreislinien 11, 11' konzentrischer Kreis gelegt und die auf diesem Kreis liegenden und benachbarten Farborte werden gesucht.

Der in seinem Farbton neu zu bestimmende Ort wird also durch die Farbtöne von vier zu ihm benachbarten Orten zusammengestellt.

Auf die vorstehende Art kann nun Sektor für Sektor auf einem Punkte- bzw. Orteraster die Farbtönung hergestellt werden.

Für Orte außerhalb der Mittelebene wird dieselbe Vorgehensweise analog angewendet.

Der oben geschilderte Ablauf kann in mehreren Durchläufen derart verwendet werden, daß der Raster aus in ihrem Farbton bestimmten Orten immer feiner wird. Je nach Feinheit der Rasterung können die Farbbereiche immer weiter an ihre immer feinere Gleichabständigkeit angenähert werden.

Es wird ausdrücklich festgehalten, daß je nach der Feinheit in der Farbtonbestimmung Toleranzen in der Gleichabständigkeit der Farbtöne bestehen. Diese Toleranzen können jedoch nach Wunsch verkleinert werden, indem die Anzahl der iterativen Durchläufe zur Verfeinerung des Rasters und dessen Farbtonbestimmung erhöht wird.

Mit Hilfe des oben beschriebenen Verfahrens können in beliebig feiner Abstufung, nämlich entsprechend der Anzahl iterativer Durchläufe, Brauntöne bestimmt werden. Dies ist ein wesentlicher Vorteil der vorliegenden Erfindung.

Während bisher zur Vereinfachung der Darstellung von einer Farbnormordnung in Form eines idealen Torus ausgegangen wurde, bringt es die Farbenordnung mit sich, daß die Raumform von dieser Regelform abweicht. Dies geht darauf zurück, daß bei helleren Farben der Sättigungsgrad und bei dunkleren Farben die Helligkeitsstufen leichter zu unterscheiden sind, was im oberen Teil eine radiale, im unteren Teil eine axiale Vergrößerung des Torus bewirkt. Wie in Fig. 4 angedeutet, deformiert sich der Torus damit apfelförmig. Im oberen Bereich ergibt sich ferner eine Deformation der zentralen Öffnung des Torus aus der Kreisform. Die zentrale Öffnung bildet, wie aus Fig. 4 ersichtlich, einen Trichter, der von oben gesehen durch eine S-förmige Wandung begrenzt ist. Die repräsentative bzw. gleichabständigste Farbverteilung der als kalt empfundenen Farben sieht man von oben als Ansicht der Trichteröffnung. Die Linie der jeweils gesättigsten kalten Farben einer Schnittebene verläßt die Mitte in kleinem Radius Richtung blaues Segment, vergrößert ihren Radius und dreht sich dabei gleichzeitig zu grün, türkis, hellblau und einem Ort des Weiß. Die gesättigsten derjenigen Farben, die als warm empfunden werden, sieht man in einer Ansicht aus der Horizontalen aus Richtung grün. In der Ebene der größten horizontalen Ausdehnung des Außenmantels liegen sich in der Mitte rot und grün gegenüber, und es entsteht die übliche sechsteilige Anordnung gemäß Fig. 2, aber mit verschobener Mitte. Das Rot liegt mehr (bis vorzugsweise ganz) im Mittelpunkt. Bei theoretischer Durchsicht von oben ergibt sich eine schematische Verteilung in die richtung gelbblau, vorzugsweise im rechten Winkel zu grün-rot.

In der Ebene grün liegt der Punkt, bei welchem der Trichter im Querschnitt Richtung oben eine bohnenartige Deformation annimmt, wogegen er nach unten sich immer mehr der Kreisform annähert. Beide Drehungen werden bis zum oberen und unteren Rand konsequent zu Ende geführt, d.h. nach unten Richtung senkrecht, nach oben Richtung horizontal kreisend. Die Ansicht der anderen, oberen Torushälfte enthält die Hautfarben. Die Farbe Weiß ist auf einen punktförmigen Ort begrenzt. Diese liegt bei dem Bereich, wo die aus der Draufsicht S-förmige Trichterbegrenzung den Scheitel 6 berührt. Die Linie rot-grün nähert sich in ihrem Bogenverlauf und ihrem Zustandekommen aus der Trichterwand einer horizontalen Geraden an. Der vertikalen Geraden bzw. Achse kommt die Trichterwand auf der Strecke vom empfindungsgemäß warmen Gelb bis zum Blau-violett am nächsten.

Die gleichabständig in einer solchen Geometrie angeordneten Farben bilden eine Farbnormanordnung, welche auf verschiedene Weise bei der Farbanwendung eingesetzt werden kann. So ist beispielsweise ein Modell vorgesehen, bei welchem Farbträger als Axialschnittflächen der Raumform mit entsprechenden Farbproben versehen sind. Diese Flächen können fächerartig um die Achse der Raumform auseinander gefaltet werden und bilden damit eine Farbnormanordnung der beschriebenen Art, aus welcher zu jeder Farbprobe ein entsprechender zugeordneter Koordinatenwert abgelesen werden kann.

Auf jedem dieser Axialschnitte ist ein Farbton dominant, der in seinen verschiedenen Entwicklungen nach Helligkeit und Sättigung variiert ist, wie oben erläutert. Damit ist es relativ einfach, eine gesuchte Farbe aufzufinden.

Die erläuterte Farbnormanordnung findet ihre Anwendung insbesondere in der Verbesserung der Farbmetrik. Bei Verfahren zur Farbaufnahme über Kameras, Meßfühler oder Holographie sowie bei der Farberkennung gestattet sie eine objektive, auf meßbaren Toleranzen beruhende Beurteilung. Die numerische Erfassung der Farben gibt die Grundlage für Farbdatenzuordnung und entsprechende Datenverarbeitung und Speicherung. Dies wiederum gestattet die numerisch gesteuerte Farbwiedergabe und Farbdatenanzeige.

Insbesondere kann eine bestimmte tolerierbare Farbabweichung für den jeweiligen Einzelfall numerisch festgelegt werden. Wird im ganzen Farbraum diese Toleranz eingehalten, so ist damit sichergestellt, daß die Farbabweichungen innerhalb des so bestimmten Bereichs verbleiben. Hierfür wird der Verbindungsvektor zwischen dem Ort der angestrebten und dem Ort der zu prüfenden Farbe bestimmt, dessen Länge ein Maß für den Farbabstand ist und dessen Richtung angibt, nach welchen anderen Farben hin die Abweichung geht, was entsprechende, gezielte Korrekturen erlaubt.

Dies erlaubt die Steuerung von Geräten der optischen bzw. elektromagnetischen Farbaufnahme durch Meßfühler und Kameras von Vorrichtungen der Farberkennung, Farbdatenzuordnung und -verarbeitung etc..

Ferner lassen sich Farbdarstellungen damit erzielen, welche die Illusion von Raum, Richtung und Bewegung unterstützen, insbesondere mehrdimensionale (3D-)Fotografie-, Film- oder Videowiedergaben.

Es liegt in der Natur der Sache und der hier beschriebenen Bewegungen, daß alle Bewegungen im Sinne der Geometrie im euklidischen Raum konsequent zu Ende geführt werden. Praktisch und im Sinne der Wellenmechanik, Quantentheorie und Wahrscheinlichkeitsrechnung jedoch enden sie mit unendlicher Toleranz, die irgendwo im Modell eine Resonanz findet.

**Patentansprüche**

1. Farbnormanordnung für Farben bzw. Misch-Farben unterschiedlicher Sättigung und bestimmter Helligkeit, in einer, eine Außenzone bestimmenden, Raumform, wobei jedem Ort (30 bis 35) der Raumform eine Farbe zugeordnet und die Farbzuordnung zu den Raumorten so getroffen ist, daß der Farbraum empfindungsgemäß gleichabständig im Sinne von DIN 6164 ist, wobei Farben mit geringerer Sättigung ein größeres Raumvolumen zukommt als Farben mit höherer Sättigung, dadurch gekennzeichnet, daß Farben mit geringerer Sättigung näher bei der Außenzone der Raumform liegen als Farben mit höherer Sättigung.

2. Farbnormanordnung nach Anspruch 1, dadurch gekennzeichnet, daß die Raumform eine Innenzone in Form einer inneren Hüllfläche (8) bestimmt, insbesondere im wesentlichen eine torusartige Ringstruktur mit gegenüberliegenden Scheiteln (6, 10) und einer Scheitelachse ist und daß im Bereich der inneren Hüllfläche (8) Orte (30 bis 35) für Farben mit höherer Sättigung sowie mit zunehmendem Radialabstand von der inneren Hüllfläche (8) Orte für Farben mit abnehmender Sättigung liegen, wobei vorzugsweise im Bereich von Segmenten der inneren Hüllfläche (8) Orte für die Farben mit höchster Sättigung, wie Blau, Grün, Rot, Gelb, Orange, Violett, Hellblau, Türkis, Hautfarben und Weiß, liegen und insbesondere nach der Helligkeit dieser Farben geordnet sind.

3. Farbnormanordnung nach Anspruch 1 oder 2, dadurch gekennzeichnet, daß an einer durch die Außenzone gebildeten Außenhülle (7) der Raumform Orte für Grautöne, vorzugsweise mit von einem zum anderen Scheitel (10, 6) zunehmender Helligkeit liegen, wobei insbesondere im Bereich einer Scheitelzone zwischen der inneren Hüllfläche (8) und der Außenhülle (7) ein Ort für Weiß und/oder im Bereich des anderen Scheitels (10) ein Ort für Schwarz liegt.

4. Farbnormanordnung nach einem der vorhergehenden Ansprüche, dadurch gekennzeichnet, daß Querschnitte durch die Raumform im wesentlichen ringförmig sind und eine Ortanordnung für den sechsteiligen Farbkreis mit Orten (19, 14, 15, 16, 17, 18) für die Farben Gelb, Orange, Rot, Violett, Blau und Grün zeigen, wobei die innere Hüllfläche (8) vorzugsweise langgestreckt sowie in ihrer Längsrichtung unterschiedlich weit und/oder von unterschiedlicher Ringform ist.

5. Farbnormanordnung nach einem der vorhergehenden Ansprüche, dadurch gekennzeichnet, daß in aufeinanderfolgenden Schnittebenen durch die Raumform jeweils ein Ort (30 bis 35) für eine Farbe höchster Sättigung liegt, daß die Farben von Schnittebene zu Schnittebene nach Helligkeit geordnet sind und sich in der jeweiligen Schnittebene nach außen durch abnehmende Sättigung verändern und daß vorzugsweise alle Farben in der jeweiligen Schnittebene gleiche Helligkeit haben.

6. Farbnormanordnung nach einem der vorhergehenden Ansprüche, dadurch gekennzeichnet, daß die Raumform, insbesondere die innere Hüllfläche (8) und die Außenhülle (7), eine sich in Richtung zu den Orten für Farben geringerer Helligkeit verengende und streckende Form aufweist, und daß vorzugsweise die trichterförmige innere Hüllfläche (8) - in Längsrichtung gesehen - eine S-förmige Begrenzung bildet.

7. Farbnormanordnung nach einem der Ansprüche 2 bis 6, dadurch gekennzeichnet, daß die innere Hüllfläche (8) zu einem Bereich mit Orten für Farben höherer Helligkeit erweitert und/oder von einer Kreisform zunehmend zu einer bohnenartigen Form verändert ist und daß die innere Hüllfläche (8) vorzugsweise zu Orten für Farben geringerer Helligkeit zunehmend der Kreisform angenähert ist, wobei insbesondere der Ort für Weiß punktartig bei dem Berührungsbereich zwischen der S-förmigen Begrenzung und dem zugehörigen, annähernd kreisringförmigen Scheitel (6) liegt.

8. Farbnormanordnung nach einem der vorhergehenden Ansprüche, dadurch gekennzeichnet, daß die Raumform mindestens einen flächigen Farbträger, insbesondere eine Vielzahl von um eine Achse angeordneter, ebener Farbträger aufweist, von denen der jeweilige vorzugsweise eine Schnittebene durch die Raumform darstellt, in welcher eine dominante Farbe nach Sättigung und Helligkeit zur Bildung von Farbmustern variiert ist und/oder der eine Raumkoordinateneinteilung zugeordnet ist.

9. Farbnormanordnung nach einem der vorhergehenden Ansprüche, dadurch gekennzeichnet, daß die Orte für Farben nach empfindungsgemäß kalten und warmen Farben geordnet sind, daß vorzugsweise in Längsansicht auf einen Scheitel (6) der Raumform eine Farbverteilung der kalten Farben in der Trichteröffnung der inneren Hüllfläche (8) liegt und/oder kalte Farben höherer Sättigung auf einer Linie liegen, die in der jeweiligen Schnittebene unter zunehmendem Krümmungsradius zu den Orten für Grün, Türkis, Hellblau und Weiß gekrümmt ist, wobei insbesondere die Orte für die warmen Farben höherer Sättigung so in der Trichteröffnung liegen, daß sie quer zur Scheitelachse vom Ort für Grün aus einzusehen sind.

10. Verfahren zur eindeutigen numerischen Bestimmung von Farben unter Verwendung der Farbnormanordnung nach einem der vorangehenden Ansprüche, dadurch gekennzeichnet, daß die Farbe in der Farbnormanordnung aufgesucht und ihre Raumkoordinaten bestimmt werden.

11. Verfahren nach Anspruch 10, dadurch gekennzeichnet, daß zur Bemessung von Farbabweichungen bzw. Farbtoleranzen die zu vergleichenden Farben in der Farbnormanordnung aufgesucht werden, wobei Verbindungsvektor zwischen ihren Raumkoordinaten das Maß für die Farbabweichung ist.

12. Verfahren nach Anspruch 10 oder 11, dadurch gekennzeichnet, daß zwischen einer Ausgangsfarbe und einer Endfarbe gleichabständige Farbreihen dadurch ermischt werden, daß auf einer Verbindungslinie zwischen den Raumorten der Ausgangs- und der Endfarbe in gleichen Abständen die Farben bestimmt werden, wobei das Mischungsverhältnis einer Farbe des jeweiligen Raumortes auf der Verbindungslinie durch das umgekehrt proportionale Verhältnis der Distanzen von zu diesem jeweiligen Raumort näher liegenden Raumorten bestimmt wird.

**Claims**

1. Normalized spacial arrangement for colours and mixed colours of varying turbidity and definite brightness in a solid shape which delimits an outer zone, where a color is assigned to each location (30 to 35) of the solid shape and where the allocation of colours to locations is such that the color spacing is subjectively equidistant in the sense of the German industrial standard 6164 (DIN 6164), a larger volume in space being attributed to turbid colours than to purer colours, characterized in that less pure colours are located nearer to the outer zone of the arrangement than purer colours.

2. Normalized colour arrangement according to claim 1, characterized in that the solid shape defines an inner zone which forms an inner envelope (8), especially a torus-like, ring-shaped structure having opposite crests (6, 10) and a crest axis, and in that the locations (30 to 35) for the more saturated colours lie in the region of the inner envelope (8), whilst locations for colours with a diminishing saturation lie at an increasing radial distance from the inner envelope (8), where locations for colours with highest saturation like blue, green, red, yellow, orange, violet, light blue, turquoise, skin colours and white lie preferentially in the region of segments of the inner envelope (8) and are in particular ordered according to the brightness of these colours.

3. Normalized colour arrangement according to claim 1 or 2, characterized in that the locations for grey values lie near an outer envelope (7) formed by the outer zone, preferentially with a brightness which increases from one crest towards the other (10, 6), and in that a location for white lies in the region of one crest, between the inner (8) and the outer (7) envelope and/or that a location for black lies between the envelopes in the region of the other crest (10).

4. Normalized colour arrangement according to any preceding claim, characterized in that sections across the solid shape are essentially ring-shaped and comprise an ensemble of locations for the six-part colour circle, with locations for the colours yellow, orange, red, violet, blue and green, where the inner envelope (8) is preferentially elongated and has different widths and/or a varying ring-shape along its length.

5. Normalized colour arrangement according to any preceding claim, characterized in that there is a location (30 to 35) for one maximally saturated colour in each successive plane section through the solid shape, that the colours are ordered by brightness when passing from one plane to the next, that their saturation decreases when moving outwards within any such plane, and that all colours in the same plane preferentially have the same brightness.

6. Normalized colour arrangement according to any preceding claim, characterized in that the solid shape, and especially the inner (8) and outer (7) envelopes have a shape which gets narrower and more elongated when moving towards less bright colours, and that - when seen lengthwise - the funnel-shaped inner envelope (8) forms an S-shaped boundary.

7. Normalized colour arrangement according to any of claims 2 to 6, characterized in that the inner envelope (8) extends in a domain containing brighter colours and/or that it is progressively deformed from a circular shape into a bean-like shape, and that preferentially the inner envelope (8) progressively gets more circular towards locations attributed to less bright colours, whereby the location for white in particular is point-like and lies in the region where the S-shaped boundary meets with the crest (6) which approximately has the shape of a circular ring.

8. Normalized colour arrangement according to any preceding claim, characterized in that the solid shape comprises at least one essentially surface-like colour substrate, in particular numerous plane substrates arranged around an axis, each of which preferentially represents a plane section across the solid shape, in which a dominant colour varies with respect to saturation and brightness so as to form colour patterns and/or is connected with a grid of spatial coordinate values.

9. Normalized colour arrangement according to any preceding claim, characterized in that the locations of the colours are arranged according to the sensation of cold and warm colours, that when viewing lengthwise towards one crest (6) of the solid shape a colour arrangement of the cold colours preferentially lies in the funnel opening of the inner envelope (8) and/or more saturated cold colours lie on a line which - within the corresponding plane section - is curved with an increasing radius of curvature towards the locations for green, turquoise, light blue and white, where in particular the locations for the highly saturated, warm colours are placed in the funnel opening such that they can be viewed from the location attributed to green, in a direction transverse to the axis of the crest.

10. Method for an unambiguous identification of colours when using the normalized colour arrangement according to any preceding claim, characterized in that one searches for the colour in the arrangement and determines its spacial coordinates.

11. Method according to claim 10, characterized in that in order to measure colour differences and tolerances one searches in the arrangement for the colours to be compared and takes the vector connecting their spacial coordinates as a measure of the colour difference.

12. Method according to claim 10 or 11, characterized in that equidistant colour sequences between an original and a final colour are determined by identifying colours at equal distances from each other on a line joining the location of the original colour to that of the final one, the mixing ratio of a colour corresponding to a particular location on said line being given by the inverse proportional ratio of the distances from the space locations which are nearer to said locations.

**Revendications**

1. Agencement spatial normé pour couleurs, respectivement pour couleurs intermédiaires ayant des saturations différentes et une intensité définie, en une représentation spatiale définissant une zone extérieure, une couleur étant assignée à chaque emplacement (30 à 35) de la représentation spatiale et l'assignation des couleurs aux emplacements étant choisie de manière à ce que l'impression donnée par l'espace des couleurs soit équidistant au sens de DIN 6164, un plus grand volume étant assigné aux couleurs moins saturées qu'à celles plus saturées, caractérisé en ce que les couleurs faiblement saturées sont plus proches de la zone extérieure de la représentation spatiale que les couleurs fortement saturées.

2. Agencement normé pour couleurs selon la revendication 1, caractérisé en ce que la représentation spatiale définit une zone intérieure ayant la forme d'une surface-enveloppe intérieure (8), et en particulier d'une structure en anneau torique avec des crêtes opposées (6, 10) et un axe des crêtes, et que des emplacements (30 à 35) pour des couleurs fortement saturées sont situés dans le domaine de l'enveloppe intérieure (8), des emplacements pour des couleurs progressivement moins saturées se succédant lorsque la distance radiale de cette enveloppe intérieure (8) augmente progressivement, les emplacements pour les couleurs de plus grande saturation telles le bleu, vert, rouge, jaune, orange, violet, bleu clair, turquoise, couleur de la peau et blanc se trouvent de préférence dans le domaine de segments de l'enveloppe intérieure (8) et sont en particulier ordonnées selon la luminosité de ces couleurs.

3. Agencement normé pour couleurs selon une des revendications 1 ou 2, caractérisé en ce que des gris sont placés sur une enveloppe extérieure (7) de la représentation spatiale formée par la zone extérieure, leur luminosité augmentant de préférence d'une crête à l'autre (10, 6), un emplacement pour le blanc étant en particulier placé dans une région proche d'une crête située entre l'enveloppe intérieure (8) et l'enveloppe extérieure (7) et/ou un emplacement pour le noir étant placé dans une région proche de l'autre crête (10).

4. Agencement normé pour couleurs selon une des revendications précédentes, caractérisé en ce que las sections transversales à travers la représentation spatiale ont essentiellement la forme d'anneaux et présentent un ensemble de positions pour le cercle chromatique à six divisions avec des emplacements (19, 14, 15, 16, 17, 18) pour les couleurs jaune, orange, rouge, violet, bleu et vert, la surface-enveloppe intérieure (8) étant de préférence allongée et présentant des largeurs différentes et/ou des formes en anneau variables le long de son extension longitudinale.

5. Agencement normé pour couleurs selon une des revendications précédentes, caractérisé en ce qu'un emplacement (30 à 35) pour chacune des couleurs les plus saturées se trouve dans chacune des sections planes successives à travers la représentation spatiale, que l'ordre des couleurs d'une section à l'autre est déterminé par leur luminosité et que les couleurs sont de moins en moins saturées lorsqu'on se déplace vers l'extérieur tout en restant dans une section plane déterminée et que toutes les couleurs dans une telle section ont de préférence la même luminosité.

6. Agencement normé pour couleurs selon une des revendications précédentes, caractérisé en ce que la représentation spatiale, en particulier la surface-enveloppe intérieure (8) et la surface-enveloppe extérieure (7) présentent une forme qui va en s'amincissant et en s'allongeant en direction des emplacements assignés à des couleurs de moindre luminosité, et que - vue dans le sens de la longueur - la surface-enveloppe intérieure (8) en forme d'entonnoir présente de préférence une frontière en forme de S.

7. Agencement normé pour couleurs selon une des revendications 2 à 6, caractérisé en ce que la surface-enveloppe intérieure (8) est étendue à un domaine comprenant des emplacements pour des couleurs de plus grande luminosité et/ou progressivement modifiée d'une forme circulaire en une forme en haricot, et que la surface-enveloppe intérieure (8) tend de préférence vers une forme circulaire pour des couleurs peu lumineuses, l'emplacement pour le blanc étant de préférence ponctuel et situé à la jonction entre la frontière en forme de S et la crête (6) sensiblement en forme d'anneau correspondante.

8. Agencement normé pour couleurs selon une des revendications précédentes, caractérisé en ce que la représentation spatiale comporte au moins une surface portant une couleur, et en particulier de nombreuses surfaces planes porteuses de couleurs agencées autour d'un axe, et dont chacune représente de préférence une section plane à travers la représentation spatiale dans laquelle des variations de saturation et de luminosité d'une couleur dominante forment un dessin ou déterminent une division au moyen de coordonnées spatiales.

9. Agencement normé pour couleurs selon une des revendications précédentes, caractérisé en ce que les emplacements des couleurs sont ordonnés en fonction de couleurs ressenties comme chaudes ou froides, qu'une vue longitudinale en direction d'une crête (6) de la représentation spatiale montre de préférence une distribution des couleurs froides dans l'ouverture en entonnoir de la surface-enveloppe intérieure (8) et/ou que des couleurs froides plus saturées sont placées sur une ligne courbée dans le plan de la section correspondante vers les emplacements pour le vert, le turquoise, le bleu clair et le blanc, et dont le rayon de courbure augmente en direction de ces emplacements, les emplacements pour les couleurs chaudes à haute saturation étant en particulier placés dans l'ouverture de l'entonnoir de manière à ce qu'elles puissent être vues transversalement à l'axe de la crête à partir de l'emplacement du vert.

10. Procédé pour déterminer numériquement les couleurs de façon univoque par utilisation de l'agencement normé pour couleurs selon une des revendications précédentes, caractérisé en ce que l'on cherche la couleur dans l'agencement normé et qu'on y détermine ses coordonnées dans l'espace.

11. Procédé selon la revendication 10, caractérisé en ce que pour la détermination de décalages entre couleurs, respectivement de tolérances entre elles, on cherche les couleurs à comparer dans l'agencement normé, le vecteur joignant leurs coordonnées spatiales représentant la valeur de la différence entre elles.

12. Procédé selon une des revendications 10 ou 11, caractérisé en ce que l'on obtient les mélanges séquentiels équidistants de couleurs entre une couleur d'origine et une couleur terminale par détermination des couleurs équidistantes sur une ligne joignant l'emplacement spatial de la couleur d'origine à celui de la couleur terminale, le rapport du mélange pour une couleur correspondant à un lieu déterminé sur ladite ligne étant déterminé par l'inverse du rapport des distances de ce lieu aux emplacements spatiaux les plus proches.

Fig.1

Fig.2

Fig. 3

Helligkeit

6

gelb

grau

grau

Trübung

grün

rot

Trübung

blau

gelb hinten
blau vorn

Fig. 4

hellblau

türkis    Grünlinie    gelb    hautfarben    6

weiss

7

7

11

grün

rot

blau

10